# EUROPÄISCHE PATENTANMELDUNG

(11) **EP 4 813 850 A1**
(43) Veröffentlichungstag der Anmeldung: **30.09.2026**
(21) Anmeldenummer: 26153670.0
(22) Anmeldetag: 23.01.2026
(51) Int. Cl.: B65B 25/00, B29C 65/00, B65B 51/14, B65B 57/16, B65B 65/02, B29C 65/78, B65B 11/28, B65B 59/02

(54) **ROTATIONSKOPF MIT VARIABLER HEIZZEIT**

(30) Priorität: 26.03.2025 DE 102025111741
(71) Anmelder: Theegarten-Pactec GmbH & Co. KG, 01237 Dresden (DE)
(72) Erfinder: Pleße, Felix, 01309 Dresden (DE); Walter, Christian, 01237 Dresden (DE); Bergmann, Matthias, 01237 Dresden (DE)
(74) Vertreter: Grünecker Patent- und Rechtsanwälte PartG mbB

(57) **Zusammenfassung**

Die vorliegende Erfindung betrifft einen Rotationskopf (1) für eine kontinuierlich arbeitende Verpackungsmaschine, umfassend mindestens eine Arbeitsstation mit:
a. wenigstens einem Halteorgan, um ein mit Packmittel (PM) umwickeltes Produkt (P) während der kontinuierlichen Drehung des Rotationskopfs (1) um dessen Drehachse (X) zu halten und von einer Aufnahmestation (AN) zu einer Abgabestation (AB) zu transportieren,
b. wenigstens einem Heizorgan, welches zwischen einer Arbeitsstellung, in welcher das Heizorgan thermisch auf das Packmittel (PM) des im Halteorgan gehaltenen Produkts (P) einwirkt, und einer Wartestellung, in welcher das Heizorgan von dem Produkt (P) und dem Packmittel (PM) beabstandet ist, überführbar ist. Um das qualitätsgerechte Verpacken eines Produkts im Packmittel auch bei Schwankungen der Verarbeitungsgeschwindigkeit einer kontinuierlich arbeitenden Verpackungsmaschine sicherzustellen, ist erfindungsgemäß vorgesehen, dass der Drehwinkelbereich (A, A'), über welchen sich das Heizorgan in der Arbeitsstellung befindet, verstellbar ist.

## Beschreibung

Die vorliegende Erfindung betrifft einen Rotationskopf für eine kontinuierlich arbeitende Verpackungsmaschine, umfassend mindestens eine Arbeitsstation mit:
a. wenigstens einem Halteorgan, um ein mit Packmittel umwickeltes Produkt während einer kontinuierlichen Drehung des Rotationskopfs um dessen Drehachse zu halten und von einer Aufnahmestation zu einer Abgabestation zu transportieren,
b. wenigstens einem Heizorgan, welches zwischen einer Arbeitsstellung, in welcher das Heizorgan thermisch auf das Packmittel des im Halteorgan gehaltenen Produkts einwirkt, und einer Wartestellung, in welcher das Heizorgan von dem Produkt und dem Packmittel beabstandet ist, überführbar ist.

Vorzugsweise ist der Rotationskopf als Siegelkopf ausgebildet und das Heizorgan als Siegelorgan, um zum thermischen Siegeln auf das Packmittel einzuwirken. Es ist aber auch möglich, dass das Heizorgan lediglich thermisch auf das Produkt und/oder Packmittel einwirkt, ohne das Packmittel zu siegeln, z.B. um das Packmittel zu glätten oder in anderen Weise thermisch zu aktivieren, oder um das Produkt und/oder Packmittel mit einer Prägung zu versehen.

Siegelköpfe sind aus der DE 10 2018 209 185.4 und DE 10 2019 210 354.5 bekannt. Verpackungsmaschinen für kleinstückige Süßwaren mit mehreren Rotationsköpfen, die nach dem Prinzip aneinander abrollender Kreise zusammenwirken, sind in DE 10 2020 208 622 A1 oder DE 10 2021 133 677 A1 offenbart.

Eine bekannte Verpackungsmaschine der Anmelderin umfasst einen als Siegelkopf ausgebildeten Rotationskopf, welcher in kontinuierlicher Arbeitsweise mittels Wärme den Boden eines Schokoladenproduktes, welches in siegelfähigem Packmittel eingeschlagen wurde, siegelt.

Für das Siegeln wird ein Heizorgan in Gestalt eines Heizstempels auf eine geeignete Temperatur erwärmt. Dieser Stempel vollführt eine Bewegung hin zum Produktboden, um auf das siegelfähige Packmittel einzuwirken. Im Anschluss wird dieser Stempel wieder vom Produkt wegbewegt. Das Hin- und Wegbewegen des Stempels erfolgt zyklisch - einmal pro Umdrehung des Siegelkopfs für jede Arbeitsstation - gesteuert durch eine ortsfest verbaute Kurvenscheibe. Jedem Siegelstempel ist ein Kurvenhebel zugeordnet, der auf der Kurvenscheibe abläuft.

Da der Weg, den der Kurvenstempel in dem einen bzw. dem anderen Zustand zurücklegt - bedingt durch die steuernde, ortsfeste Kurvenscheibe - konstant ist, variiert die Zeit, in der dieser Siegelstempel in der Arbeitsstellung verharrt, mit der eingestellten Produktionsgeschwindigkeit der Verpackungsmaschine.

Da eine Verpackungsmaschine üblicherweise mit ihrer Verarbeitungsgeschwindigkeit auf den ankommenden Produktstrom reagiert, führt eine starre Kopplung der Arbeitsstellung des Heizorgans an die Drehbewegung des Rotationskopfes, insbesondere bei ungleichmäßiger Handbeschickung der Maschine, zu einem signifikanten Anteil von nicht qualitätsgerecht verpackten Produkten.

Im Beispiel der bekannten Verpackungsmaschine der Anmelderin bedeutet dies eine Schwankung der Siegelzeit von ca. 50%.

Für jede Produkt-Packmittelkonfiguration müssen die optimalen Siegelparameter (Siegeltemperatur, -druck und -zeit) ermittelt werden.

Insbesondere bei der Verwendung von einlagigem Packmittel (Außenwickler ohne Innenwickler) ist nur eine geringe Isolationswirkung zwischen dem Heiß-Siegelwerkzeug und dem zu verpackenden Produkt gegeben.

Besonders bei der Verwendung von Monofolie (= einlagige Kunststofffolie oder siegelfähiges Packmittelpapier) zur Verpackung von schmelzfähigen Produkten, z.B. aus Schokolade, müssen Siegelparameter gefunden werden, die für einen bestimmten Leistungsbereich der Verpackungsmaschine geeignet sind. Aufgrund der geringen Wärmekapazität der Monofolie geht überschüssige Wärme, die den zur Aktivierung des Packmittels erforderlichen Wärmebedarf übersteigt, schnell auf das Produkt über. Wird die Verarbeitungsgeschwindigkeit der Maschine geändert, kommt es durch Anschmelzen des zu verpackenden Produktes zu sichtbaren Qualitätsmängeln in der Verpackung.

Konkret bedeutet das: Siegelparameter, die für das qualitätsgerechte Verpacken eines schmelzfähigen Produktes, z.B. aus Schokolade, bei einer nominalen Maschinengeschwindigkeit in Monofolie optimal sind, führen bei einer halbierten Maschinengeschwindigkeit zum Anschmelzen der Schokolade im Bodenbereich des Produktes, also an der Produktseite, auf die das Heizorgan einwirkt.

Der vorliegenden Erfindung liegt die Aufgabe zugrunde, das qualitätsgerechte Verpacken eines Produkts im Packmittel auch bei Schwankungen der Verarbeitungsgeschwindigkeit einer kontinuierlich arbeitenden Verpackungsmaschine sicherzustellen.

Die Aufgabe der Erfindung wird gelöst durch den Rotationskopf nach Anspruch 1 und das Verfahren nach Anspruch 10.

Offenbart ist ein Rotationskopf für eine kontinuierlich arbeitende Verpackungsmaschine, umfassend mindestens eine Arbeitsstation mit:
a. wenigstens einem Halteorgan, um ein mit Packmittel umwickeltes Produkt während einer kontinuierlichen Drehung des Rotationskopfs um dessen Drehachse zu halten und von einer Aufnahmestation zu einer Abgabestation zu transportieren,
b. wenigstens einem Heizorgan, welches zwischen einer Arbeitsstellung, in welcher das Heizorgan thermisch auf das Packmittel des im Halteorgan gehaltenen Produkts einwirkt, und einer Wartestellung, in welcher das Heizorgan von dem Produkt und dem Packmittel beabstandet ist, überführbar ist, wobei der Drehwinkelbereich, über welchen sich das Heizorgan in der Arbeitsstellung befindet, verstellbar ist.

Das Heizorgan ist konfiguriert, um während der kontinuierlichen Drehung des Rotationskopfs um dessen Drehachse thermisch auf das Packmittel einzuwirken, das dem im Halteorgan gehaltenen Produkt zugeordnet ist. Während dieser Einwirkdauer, der sog. Heizzeit, legt das Heizorgan bzgl. der Drehachse des Rotationskopfs einen bestimmten Drehwinkel zurück. Der anspruchsgemäße Drehwinkelbereich entspricht also dem Betrag des Drehwinkels bzgl. der Drehachse des Rotationskopfs, den das Heizorgan in der Arbeitsstellung zurücklegt. Dieser Drehwinkel wird vorzugsweise gemessen vom Beginn des Kontakts zwischen dem Heizorgan und dem Packmittel bis zum Lösen dieses Kontakts. Durch die Verstellbarkeit dieses Drehwinkelbereichs kann auch für identische Produktformate und Packmittel die Heizzeit, d.h. die Einwirkdauer des Heizorgans auf das Packmittel, kontrolliert werden, um so auf Drehzahländerungen des Rotationskopfs unmittelbar und ohne zwischenzeitiges Anhalten des Rotationskopfs zu reagieren.

An einem Rechenbeispiel wird die praktische Bedeutung der Erfindung nachvollziehbar. Bei einer nominalen Maschinengeschwindigkeit werden X Produkte pro Sekunde mit dem Rotationskopf bearbeitet. Jedes dieser Produkte wird an der Aufnahmestation vom Rotationskopf aufgenommen, mit dem Halteorgan von der Aufnahmestation zur Abgabestation transportiert und an der Abgabestation wieder abgegeben. Wird nun die Verarbeitungsgeschwindigkeit der Maschine geändert und auf die Hälfte herabgeregelt, was im laufenden Verpackungsprozess innerhalb von Sekunden in Reaktion auf Schwankungen im ankommenden Produktstrom geschehen kann, würden bei der halbierten Geschwindigkeit immer noch X/2 Produkte pro Sekunde den Rotationskopf durchlaufen. Wäre der Drehwinkelbereich, über welchen sich das Heizorgan in der Arbeitsstellung befindet, konstant, würde sich die Heizzeit beim Halbieren der Maschinengeschwindigkeit verdoppeln. Insbesondere bei einlagigen Packmitteln mit geringer Wärmekapazität würde das Produkt durch den höheren Wärmeeintrag aufgrund der längeren Heizzeit sichtbar anschmelzen. Ohne gesonderte Maßnahme würden also X/2 optisch beeinträchtigte Produkte pro Sekunde (= 30X Produkte pro Minute) den Rotationskopf verlassen. Die Erfindung schafft diesem Problem durch Entkoppelung der Heizzeit von der Drehbewegung des Rotationskopfs bzw. durch Anpassung der Heizzeit Abhilfe.

Das Halteorgan ist vorzugsweise derart konfiguriert, um das mit Packmittel umwickelte Produkt während der kontinuierlichen Drehung des Rotationskopfs um dessen Drehachse klemmend zu halten. Ein solches Halteorgan ist beispielsweise als Haltebackenpaar oder Klemmbackenpaar ausgebildet. Das Halteorgan ist vorzugsweise auch derart konfiguriert, um das Produkt so zu halten, dass ein Produktboden, z.B. mit sich überlappenden Packmittelfalten zur Einwirkung des Heizorgans freiliegt. Der Produktboden weist dabei vorzugsweise radial zu der Drehachse des Rotationskopfs hin.

Das Heizorgan ist beispielsweise ein Heiz- oder Siegelstempel. Dieser Stempel kann ausgebildet sein, um überlappende Packmittelfalten gegen das Produkt zu drücken und die überlappenden Packmittelfalten - idealerweise ohne Schädigung des Produkts - durch Wärmeeinwirkung zu verbinden bzw. thermisch zu siegeln. Eine luftdichte Verpackung kann durch das Siegeln erzielt werden, ist aber nicht zwingend erforderlich. In der Wartestellung wirkt das Heizorgan vorzugsweise nicht auf das Packmittel und/oder das Produkt ein. Das Heizorgan kann z.B. ein aktives oder passives Heizorgan sein. Ein aktives Heizorgan umfasst wenigstens ein Heizelement, welches in der Lage ist, Wärme zu erzeugen, z.B. eine mit Strom beaufschlagbare Heizschleife. Ein passives Heizorgan kann durch externe Energiezufuhr beheizt werden, z.B. durch Induktion.

Vorzugsweise umfasst der Rotationskopf eine Mehrzahl solcher Arbeitsstationen, z.B. sechs, acht, zehn oder zwölf, wobei die Arbeitsstationen bevorzugt identisch ausgebildet und/oder in regelmäßigen Winkelabständen um die Drehachse angeordnet sind. Bei einer Mehrzahl solcher Arbeitsstationen erhöht sich ein Arbeitstakt bei einer Umdrehung des Rotationskopfs um dessen Drehachse um einen entsprechenden Faktor. Bei Y Umdrehungen pro Minute und Z Arbeitsstationen können insgesamt Y*Z Arbeitstakte (AT) pro Minute (AT/min) realisiert werden.

Idealerweise ist das Heizorgan mechanisch zwischen der Arbeitsstellung und der Wartestellung überführbar. Durch eine mechanische Steuerung kann die Bewegung des Heizorgans, i.d.R. eine Schwenkbewegung, direkt an die Drehbewegung des Rotationskopfs gekoppelt werden und somit optimal auf die Bewegung des Halteorgans und die Lage des darin gehaltenen Produkts abgestimmt werden. Dadurch kann eine elektronische Bewegungssteuerung des Heizorgans entfallen.

Es kann von Vorteil sein, wenn der Rotationskopf mindestens einen mit dem Heizorgan gekoppelten Kurvenhebel und mindestens eine Kurvenbahn umfasst, wobei der Kurvenhebel bei Drehung des Rotationskopfs um dessen Drehachse die Kurvenbahn abläuft und das Heizorgan entsprechend dem Verlauf der Kurvenbahn in die Arbeitsstellung oder in die Wartestellung überführt. Diese Technik funktioniert auch bei hohen Drehzahlen und schnellen Drehzahländerungen ausgesprochen zuverlässig, weil die Bewegung des Heizorgans durch Kopplung an die Drehbewegung des Rotationskopfs immer exakt auf die Bewegung des Halteorgans und des darin geförderten Produkts abgestimmt ist. Vorzugsweise ist die Kurvenbahn in sich geschlossen. Bevorzugt verläuft die Kurvenbahn um die Drehachse des Rotationskopfs. Es kann nützlich sein, wenn der Kurvenhebel federnd gegen die Kurvenbahn vorgespannt ist und an die Kurvenbahn angedrückt wird. Dadurch kann sichergestellt werden, dass der Kurvenhebel auch bei hohen Drehzahlen immer genau dem Verlauf der Kurvenbahn folgt und sich nicht z.B. durch Trägheitseffekte von der Kurvenbahn löst.

Es kann sich als praktisch erweisen, wenn die Kurvenbahn wenigstens zwei verschiedene Kurvenbahnabschnitte umfasst, die der Kurvenhebel bei Drehung des Rotationskopfs um dessen Drehachse nacheinander durchläuft, wobei sich das Heizorgan in der Arbeitsstellung befindet, wenn der Kurvenhebel den ersten Kurvenbahnabschnitt durchläuft, und sich das Heizorgan in der Wartestellung befindet, wenn der Kurvenhebel den zweiten Kurvenbahnabschnitt durchläuft, wobei vorzugsweise die Kurvenbahn derart verstellbar ist, dass sich die Drehwinkelbereiche der Kurvenbahnabschnitte verändern. Insbesondere kann es sinnvoll sein, wenn sich durch Verstellung der Kurvenbahn die Längen der Drehwinkelbereiche der Kurvenbahnabschnitte gegensätzlich verändern, sodass sich bei einer Verlängerung des ersten Kurvenbahnabschnitts der zweite Kurvenbahnabschnitt entsprechend verkürzt, und umgekehrt.

Es kann sich als nützlich erweisen, wenn die Kurvenbahn wenigstens zwei Laufspuren umfasst, die vorzugsweise parallel zueinander ausgerichtet sind (bzw. sich in parallelen Ebenen erstrecken, die jeweils senkrecht zur Drehachse ausgerichtet sind), wobei jeder Laufspur mindestens eine drehbar am Kurvenhebel gelagerte Laufrolle zugeordnet ist, wobei vorzugsweise die Kurvenbahn radial von der Drehachse abweist und der Kurvenhebel immer der Laufspur mit dem größten Radius zur Drehachse folgt, oder die Kurvenbahn radial zu der Drehachse hinweist und der Kurvenhebel immer der Laufspur mit dem kleinsten Radius zur Drehachse folgt. Durch diese Laufspuren kann auf einfache Weise eine zuverlässige und kontrollierte Veränderung der Kurvenbahn erreicht werden. Die Laufrollen sind dabei vorzugsweise drehbar auf einer starren Achse des Kurvenhebels gelagert. So kann die Bewegung des Kurvenhebels auch dem Verlauf von einer der Laufspuren folgen, z.B. der Laufspur mit dem größeren Radius.

Es kann von Vorteil sein, wenn die Laufspuren relativ zueinander verstellbar sind, vorzugsweise durch abschnittsweise Veränderung des Radius' von mindestens einer der Laufspuren oder durch Verdrehung mindestens einer der Laufspuren um die Drehachse des Rotationskopfs, sodass die Längen der Drehwinkelbereiche der Kurvenbahnabschnitte (vorzugsweise gegensätzlich) verändert werden, insbesondere, um den Drehwinkelbereich des der Arbeitsstellung des Heizorgans zugeordneten Kurvenbahnabschnitts zu verlängern und gleichzeitig den Drehwinkelbereich des der Wartestellung des Heizorgans zugeordneten Kurvenbahnabschnitts zu verkürzen, oder umgekehrt, bevorzugt exakt oder im Wesentlichen proportional zu einer Drehzahländerung, sodass eine Verdopplung der Drehzahl zu einer Verdopplung der Länge des der Arbeitsstellung des Heizorgans zugeordneten Drehwinkelbereichs - und eine Halbierung der Drehzahl zu einer Halbierung der Länge des der Arbeitsstellung des Heizorgans zugeordneten Drehwinkelbereichs - führt. Bei dieser Ausführung kann besonders einfach eine Anpassung der Heizzeit an eine Drehzahländerung des Rotationskopfs erfolgen.

Es kann von Nutzen sein, wenn der Rotationskopf mindestens zwei Kurvenscheiben aufweist, wobei sich an jeder der Kurvenscheiben eine der Laufspuren befindet, wobei mindestens eine der Kurvenscheiben um die Drehachse des Rotationskopfs verdrehbar ist und ggf. eine der Kurvenscheiben drehfest mit der Drehachse des Rotationskopfs verbunden ist, wobei bevorzugt beide Kurvenscheiben deckungsgleich anordenbar sind. In dieser Ausführung lässt sich eine verstellbare Kurvenbahn besonders einfach und kostengünstig herstellten. Jede Kurvenbahn wird dabei durch eine eigene Kurvenscheibe gebildet. Bei identischen Kurvenscheiben verringert sich der Herstellungsaufwand gegenüber unterschiedlichen Kurvenscheiben. Bei deckungsgleicher Anordnung sind die Laufspuren der Kurvenbahn exakt parallel zueinander und identisch im Verlauf. Wird die verstellbare Kurvenscheibe gegenüber der ortsfesten Kurvenscheibe verdreht, so können die Längen der Kurvenbahnabschnitte gezielt und einfach verändert werden.

Es kann zweckdienlich sein, wenn die Überführung des Heizorgans zwischen der Arbeitsstellung und der Wartestellung zyklisch erfolgt, vorzugsweise einmal pro Umdrehung des Rotationskopfes um dessen Drehachse.

Vorzugsweise wird der Drehwinkelbereich des der Arbeitsstellung zugeordneten Kurvenbahnabschnitts bei abnehmender Drehzahl des Rotationskopfs verkleinert und/oder bei zunehmender Drehzahl des Rotationskopfs vergrößert, bevorzugt proportional zur Änderung der Drehzahl.

Der Drehwinkelbereich, in welcher sich das Heizorgan in der Arbeitsstellung befindet, kann beispielsweise proportional zur Drehzahländerung des Rotationskopfs verändert werden, d.h. bei Verdoppelung der Drehzahl wird der Drehwinkelbereich, in welcher sich das Heizorgan in der Arbeitsstellung befindet, verdoppelt.

Es kann hilfreich sein, wenn das Verstellen des Drehwinkelbereichs durch einen Antrieb, vorzugsweise einen automatisiert ansteuerbaren Stellantrieb wie einen Schrittmotor, einen Servomotor oder einen pneumatischen Stellantrieb erfolgt, vorzugsweise während der Drehung des Rotationskopfs. Ein solcher Antrieb lässt sich präzise ansteuern und arbeitet zuverlässig. Ein Drehzahlsensor kann dabei die Drehzahl des Rotationskopfs messen und die Drehstellung der verstellbaren Kurvenscheibe entsprechend der gemessenen Drehzahl des Rotationskopfs einstellen. Die Drehzahl des Rotationskopfs kann z.B. mehrmals pro Sekunde gemessen werden. Die Drehstellung der verstellbaren Kurvenscheibe kann vorzugsweise bei laufender Drehung des Rotationskopfs innerhalb weniger Millisekunden eingestellt und verändert werden.

Ein weiterer Aspekt der Erfindung betrifft eine Verpackungsmaschine mit einem Rotationskopf nach einer der vorangehenden Ausführungen.

Noch ein weiterer Aspekt der Erfindung betrifft ein Verfahren zur Verpackung von kleinstückigen Produkten, insbesondere Süßwaren, in einem vorzugsweise siegelfähigen Packmittel, vorzugsweise mit dem Rotationskopf nach einer der vorangehenden Ausführungen, wobei das mit Packmittel umwickelte Produkt in einem Halteorgan eines sich kontinuierlich drehenden Rotationskopfs aufgenommen und während der Drehung des Rotationskopfs um dessen Drehachse mit dem Halteorgan von einer Aufnahmestation zu einer Abgabestation transportiert wird, wobei ein Heizorgan während der kontinuierlichen Drehung des Rotationskopfs von einer Wartestellung in eine Arbeitsstellung überführt wird, in welcher das Heizorgan thermisch auf das dem im Halteorgan gehaltenen Produkt zugeordnete Packmittel einwirkt, wobei der Drehwinkelbereich über welchen sich das Heizorgan in der Arbeitsstellung befindet, verstellt wird.

Es kann von Vorteil sein, dass der Drehwinkelbereich bei einer Drehzahländerung des Rotationskopfs verstellt wird, vorzugsweise derart, dass die Heizzeit bzw. die Einwirkdauer des Heizorgans auf das Packmittel vor, während und nach der Drehzahländerung exakt oder im Wesentlichen gleich bleibt. Die Heizzeit wird maßgeblich dadurch bestimmt, dass das Packmittel thermisch aktiviert werden muss. Zur thermischen Aktivierung des Packmittels muss eine bestimmte Aktivierungstemperatur überschritten werden. Die dafür erforderliche Wärmemenge hängt u.a. von der Wärmekapazität des Packmittels und der Größe der zu siegelnden Fläche ab. Allerdings darf die auf das Packmittel einwirkende, thermische Energie nicht zu groß sein, da das Packmittel und/oder das Produkt sonst beschädigt werden kann/können. Folglich sind der Temperatur des Heizorgans vergleichsweise enge Grenzen gesetzt. Demnach kann die Heizzeit nicht beliebig variiert werden.

Es kann nützlich sein, wenn das Produkt in der Einschlagart "Brieffaltung", insbesondere "diagonale Brieffaltung", teilverpackt im Halteorgan gehalten wird. Bei der Einschlagart "diagonale Brieffaltung" sind verschiedene Verschlussarten für die letzte Packmittelfalte am Produktboden ("Außenfalte") möglich. Neben dem reinen Andrücken dieser Falte - geeignet für Packmittel mit geringen Rückstellkräften - ist auch das Verschließen mittels Kaltsiegelmaske sowie Heißsiegeln realisierbar. Durch Heißsiegeln werden die am Produktboden überlappenden Packmittelfalten aneinander fixiert und können durch definierte Krafteinwirkung voneinander gelöst werden. Dadurch kann ein unbeabsichtigtes Öffnen der Verpackung vermieden werden. Zusätzlicher Nutzen kann Originalitätsverschluss sein. Grundsätzlich ist das erfindungsgemäße Verfahren aber bei allen Falt- und Einschlagarten anwendbar.

Es kann sich als hilfreich erweisen, wenn sich an einer Seite des im Halteorgan gehaltenen Produkts, vorzugsweise am Produktboden, überlappende Packmittelfalten befinden, auf die das Heizorgan einwirkt, wobei der Produktboden bevorzugt rechteckig ist und/oder zu der Drehachse des Rotationskopfs hinweist. Der Produktboden ist zur Einwirkung durch das Heizorgan i.d.R. gut zugänglich. Ein rechteckiger Produktboden erleichtert das Ausbilden der sich überlappenden Packmittelfalten, in dem das Packmittel über die den Produktboden begrenzenden Produktkanten gefaltet bzw. geknickt wird. Das Produkt selbst kann beispielsweise quaderförmig ausgebildet sein oder eine konvex bzw. kuppelförmige oder kugelabschnittsförmig gewölbte Oberseite aufweisen. Es gibt aber grundsätzlich keine Einschränkungen im Hinblick auf die Produktform, da das erfindungsgemäße Verfahren bei verschiedensten Produktformen anwendbar ist.

Es kann praktisch sein, wenn das Packmittel ein einlagiges Packmittel ist. Ein einlagiges Packmittel ist i.d.R. leicht herstellbar, weil keine unterschiedlichen Materialien und Lagen miteinander verbunden werden müssen. Zudem ist ein einlagiges Packmittel aus ähnlichen Gründen auch leicht recyclebar, da keine unterschiedlichen Materialien und Lagen voneinander getrennt werden müssen. Allerdings weist ein einlagiges Packmittel i.d.R. eine recht geringe Wärmekapazität auf, sodass überschüssige thermische Energie des Heizorgans leicht zum Anschmelzen des zu verpackenden Produkts führen kann. Von daher kommen die erfindungsgemäßen Vorteile bei einem einlagigen Packmittel besonders zur Geltung. Das Packmittel besteht vorzugsweise aus Kunststoff und/oder Metall und/oder Papier.

Es kann von Vorteil sein, wenn sich der Rotationskopf kontinuierlich mit einer Drehzahl im Bereich von 50 bis 200 Umdrehungen pro Minute (U/min), vorzugsweise im Bereich von 75 bis 150 U/min dreht. Derartige Drehzahlen stellen das Optimum bei der Verarbeitungsgeschwindigkeit und Verpackungsqualität nach den aktuell verfügbaren Möglichkeiten dar. Bei höheren Drehzahlen spielen zunehmend Trägheitskräfte eine Rolle, die auf das Produkt, das Packmittel und auf die Maschinenteile einwirken.

Es kann von Vorteil sein, wenn der Rotationskopf im Bereich von X/2 bis X Arbeitstakte pro Minute (AT/min) ausführt. Mit dieser Anzahl von Arbeitstakten wird eine hohe Verpackungsleistung bei gleichzeitig hoher Prozessstabilität erreicht. D.h., die niedrige Maschinengeschwindigkeit X/2 kann sich auf X verdoppeln und die höhere Maschinengeschwindigkeit X kann sich auf X/2 halbieren.

Es kann sich als sinnvoll erweisen, wenn der Winkelbereich bzgl. der Drehachse des Rotationskopfs, in welchem sich das Heizorgan in der Arbeitsstellung befindet, mit zunehmender Drehzahl des Rotationskopfs vergrößert wird und mit abnehmender Drehzahl des Rotationskopfs verkleinert wird.

### Kurze Beschreibung der Figuren

Es zeigen:

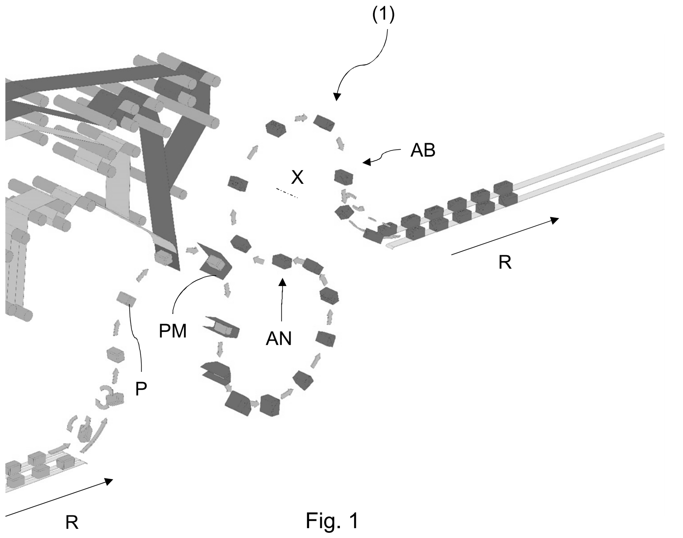

Fig. 1 eine schematische Ansicht eines Verpackungsverfahrens für kleinstückige Süßwaren mit rechteckigem Produktboden bei der Einschlagart Brieffaltung auf einer herkömmlichen Verpackungsmaschine der Anmelderin, wobei sich Packmittelfalten auf dem Produktboden überlappen.

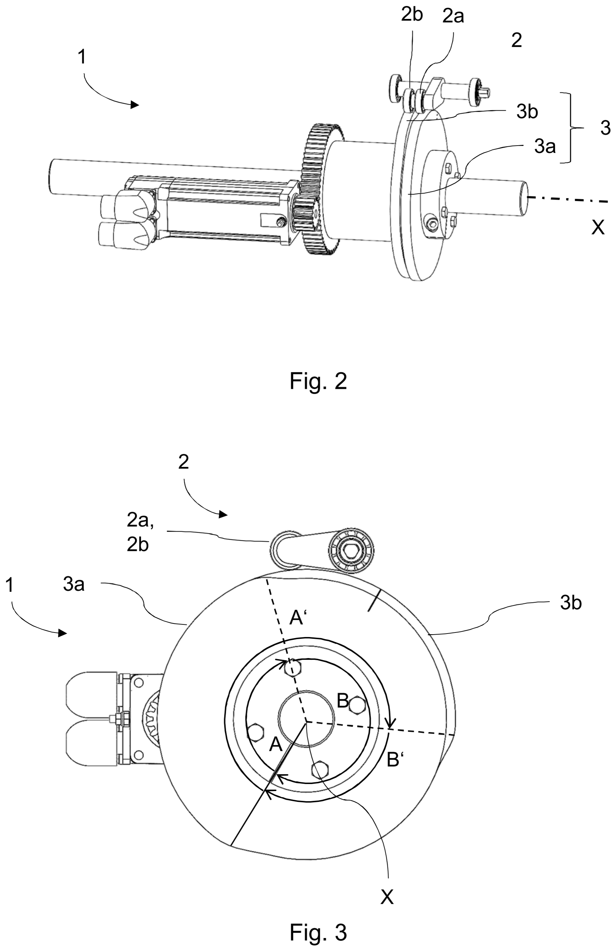

Fig. 2 eine perspektivische Ansicht des stationären Teils eines erfindungsgemäßen Rotationskopfs, wobei der Übersicht halber lediglich der mit dem Rotationskopf rotierende Kurvenhebel zu einer Arbeitsstation und die stationäre Kurvenbahn mit mehreren Laufspuren auf relativ zueinander verdrehbaren Kurvenscheiben dargestellt sind.
Fig. 3 eine Seitenansicht des Rotationskopfs aus Fig. 2 in Richtung der Drehachse.

### Detaillierte Beschreibung des bevorzugten Ausführungsbeispiels

Gegenstand der Erfindung ist ein Rotationskopf 1 auf der Basis einer an sich bekannten Bauweise. Daher ist in den Figuren der rotierende Teil des Rotationskopfs nur teilweise und vereinfacht dargestellt. Der als Siegelkopf ausgebildete Rotationskopf 1 des bevorzugten Ausführungsbeispiels weist herkömmlicherweise eine ortsfeste Kurvenscheibe 3a mit stationärer unveränderlicher Kurvenbahn 3a auf, welche ein mit dem Heizorgan gekoppelter Kurvenhebel 2 bei der Drehung des Rotationskopfs 1 um dessen Drehachse X abläuft. Dieser Rotationskopf 1 wird erfindungsgemäß um eine zweite, verstellbar Kurvenscheibe 3b zur Steuerung der Bewegung des Siegelstempels erweitert. Die zusätzliche, zweite Kurvenscheibe 3b ist drehbar gelagert.

Über eine Hohlwelle ist diese zweite Kurvenscheibe 3b mit einer Antriebseinheit verbunden. Im Beispiel handelt es sich bei der Antriebseinheit um ein Getriebe, dass z.B. durch einen Servomotor angetrieben wird.

Der dem Heizorgan bzw. Heizstempel zugeordnete Kurvenhebel 2 ist mit zwei Kurvenrollen 2a, 2b ausgestattet. Die erste Kurvenrolle 2a ist der ortsfesten Kurvenscheibe 3a zugeordnet und läuft in der zu dieser Kurvenscheibe 3a gehörenden Laufspur 3a. Die zweite Kurvenrolle 2b ist der zweiten, beweglichen Kurvenscheibe 3b zugeordnet und läuft in der zu dieser Kurvenscheibe 3b gehörenden Laufspur 3b.

Beide Kurvenscheiben 3a, 3b besitzen einen Bereich (Rast) in dem der Kurvenhebel 2 an das Produkt P angeschwenkt ist sowie einen Bereich (Rast) in dem der Kurvenhebel 2 von dem Produkt P weggeschwenkt ist. Der an das Produkt P angeschwenkte Zustand, in welchem das Heizorgan bzw. der Heizstempel auf das dem Produkt P zugeordnete Packmittel PM einwirkt, entspricht der Arbeitsstellung. Der von dem Produkt P weggeschwenkte Zustand, in welchem das Heizorgan bzw. der Heizstempel nicht auf das dem Produkt P zugeordnete Packmittel PM einwirkt, entspricht der Wartestellung.

Die Länge des ersten Drehwinkelbereichs A, A' für die angeschwenkte Position des Kurvenhebels 2 entspricht der notwendigen Länge für die kleinste gewünschte Siegelzeit. Bezüglich der Drehung des Rotationskopfs 1 um dessen Drehachse entspricht die Länge A/A' dem Drehwinkelbereich, in welchem sich das Heizorgan in der Arbeitsstellung befindet. Im Beispiel ist dieser Bereich A gerade so lang, dass der Siegelstempel bei der Maschinengeschwindigkeit X/2 für einen bestimmten Zeitraum an den Produktboden herangeschwenkt bleibt (Arbeitsstellung). Für diese Einstellung kann nachweislich eine qualitätsgerechte Verpackung hergestellt werden.

Die drehbare Kurvenscheibe 3b ist für diesen Fall deckungsgleich zur ortsfesten Kurvenscheibe 3a eingestellt.

Wird nun eine höhere Verarbeitungsgeschwindigkeit für die Verpackungsmaschine eingestellt, so wird die drehbare Kurvenscheibe 3b relativ gegen die ortsfeste Kurvenscheibe 3a verdreht. Dabei wird der Drehwinkelbereich, in welchem sich das Heizorgan in der Arbeitsstellung befindet, von A auf A' vergrößert.

Der mit zwei Kurvenrollen 2a, 2b ausgestattete Kurvenhebel 2 läuft stets auf der Kurvenbahn 2 ab, die den größeren Radius bzw. den größeren Abstand zum Kurvenmittelpunkt besitzt.

Durch geeignetes Verstellen der drehbaren Kurvenscheibe 3b kann auf diese Weise die Rast für den angeschwenkten Zustand des Siegelstempels (Arbeitsstellung) auf fast die doppelte Länge von A auf A' erweitert werden. In entsprechender Weise verkürzt sich der Drehwinkelbereich, in welchem sich das Heizorgan in der Wartestellung befindet, von B auf B'.

Da das Verdrehen der verdrehbaren Kurvenscheibe 3b automatisch - durch einen z.B. von einem Drehzahlsensor angesteuerten Servomotor - realisiert wird, kann die Anpassung der Siegelzeit während des Maschinenbetriebs stufenlos zur Maschinengeschwindigkeit erfolgen.

Im Beispiel kann also für alle Maschinengeschwindigkeiten zwischen X/2 und X eine nahezu konstante Siegelzeit erreicht werden.

Eine Abwandlung dieses Ausführungsbeispiels umfasst eine Mehrzahl von verstellbaren Kurvenscheiben. Damit ist auch eine automatisierte Verlängerung der Rast über das Doppelte hinaus möglich. Hier könnte auch auf eine ortsfeste Kurvenscheibe verzichtet werden.

Eine weitere Abwandlung dieses Ausführungsbeispiels umfasst ein verstellbares Kurvensegment anstelle einer verdrehbaren, zweiten Kurvenscheibe. Durch ein verstellbares Kurvensegment, das beispielsweise eingeschwenkt werden kann, kann der Verlauf der Kurvenbahn gezielt beeinflusst werden. Mit dieser Lösung sind vor allem kleine Verlängerung der Rast möglich.

Die Kombination einer festen Kurvenscheibe 3a mit zumindest einer weiteren, vorzugsweise automatisiert verdrehbaren Kurvenscheibe 3b erleichtert eine automatische Anpassung des Drehwinkelbereichs, in welchem sich das Heizorgan in der Arbeitsstellung befindet, sodass die Heizzeit während des Hoch- und Abtourens einer Verpackungsmaschine exakt oder im Wesentlichen konstant gehalten werden kann. Eine direkte Proportionalität zwischen Drehzahl und Drehwinkelbereich der Arbeitsstellung, sodass die Heizzeit über Drehzahlschwankungen hinweg exakt konstant bleibt, ist nicht zwingend erforderlich.

### Bezugszeichenliste

- 1: Rotationskopf
- 2: Kurvenhebel
- 2a: Laufrolle zur ortsfesten Laufspur/Kurvenscheibe
- 2b: Laufrolle zur verstellbaren Laufspur/Kurvenscheibe
- 3: Kurvenbahn
- 3a: Ortsfeste Laufspur/Kurvenscheibe
- 3b: Verstellbare Laufspur/Kurvenscheibe
- A, A': Erster Drehwinkelbereich (der Arbeitsstellung zugeordnet)
- AN: Aufnahmestation
- AB: Abgabestation
- B, B': Zweiter Drehwinkelbereich (der Wartestellung zugeordnet)
- P: Produkt
- PM: Packmittel
- R: Arbeitsrichtung
- X: Achse

## Patentansprüche

1. Rotationskopf für eine kontinuierlich arbeitende Verpackungsmaschine, umfassend mindestens eine Arbeitsstation mit:
a. wenigstens einem Halteorgan, um ein mit Packmittel (PM) umwickeltes Produkt (P) während einer kontinuierlichen Drehung des Rotationskopfs (1) um dessen Drehachse (X) zu halten und von einer Aufnahmestation (AN) zu einer Abgabestation (AB) zu transportieren,
b. wenigstens einem Heizorgan, welches zwischen einer Arbeitsstellung, in welcher das Heizorgan thermisch auf das Packmittel (PM) des im Halteorgan gehaltenen Produkts (P) einwirkt, und einer Wartestellung, in welcher das Heizorgan von dem Produkt (P) und dem Packmittel (PM) beabstandet ist, überführbar ist, **dadurch gekennzeichnet, dass** der Drehwinkelbereich (A, A'), über welchen sich das Heizorgan in der Arbeitsstellung befindet, verstellbar ist.

2. Rotationskopf (1) nach dem vorangehenden Anspruch, **dadurch gekennzeichnet, dass** der Rotationskopf (1) mindestens einen mit dem Heizorgan gekoppelten Kurvenhebel (2) und mindestens eine Kurvenbahn (3) umfasst, wobei der Kurvenhebel (2) bei Drehung des Rotationskopfs (1) um dessen Drehachse (X) die Kurvenbahn (3) abläuft und das Heizorgan entsprechend dem Verlauf der Kurvenbahn (3) in die Arbeitsstellung oder in die Wartestellung überführt.

3. Rotationskopf (1) nach dem vorangehenden Anspruch, **dadurch gekennzeichnet, dass** die Kurvenbahn (3) wenigstens zwei verschiedene Kurvenbahnabschnitte (A, B) umfasst, die der Kurvenhebel (2) bei Drehung des Rotationskopfs (1) um dessen Drehachse (X) nacheinander durchläuft, wobei sich das Heizorgan in der Arbeitsstellung befindet, wenn der Kurvenhebel (2) den ersten Kurvenbahnabschnitt (A, A') durchläuft, und sich das Heizorgan in der Wartestellung befindet, wenn der Kurvenhebel (2) den zweiten Kurvenbahnabschnitt (B, B') durchläuft, wobei vorzugsweise die Kurvenbahn (3) derart verstellbar ist, dass sich die Drehwinkelbereiche (A, A'; B, B') der Kurvenbahnabschnitte (A, B) verändern.

4. Rotationskopf (1) nach einem der beiden vorangehenden Ansprüche, **dadurch gekennzeichnet, dass** die Kurvenbahn (3) wenigstens zwei Laufspuren (3a, 3b) umfasst, die vorzugsweise parallel zueinander ausgerichtet sind, wobei jeder Laufspur (3a, 3b) mindestens ein mit dem Kurvenhebel (2) gekoppelter Abnehmer, wie ein Gleitschuh oder eine drehbar am Kurvenhebel (2) gelagerte Laufrolle (2a, 2b) zugeordnet ist, wobei vorzugsweise die Kurvenbahn (3) radial von der Drehachse (X) abweist und der Kurvenhebel (2) immer der Laufspur (3a, 3b) mit dem größten Radius zur Drehachse (X) folgt, oder die Kurvenbahn (3) radial zu der Drehachse (X) hinweist und der Kurvenhebel (2) immer der Laufspur (3a, 3b) mit dem kleinsten Radius zur Drehachse (X) folgt.

5. Rotationskopf (1) nach dem vorangehenden Anspruch, **dadurch gekennzeichnet, dass** die Laufspuren (3a, 3b) relativ zueinander verstellbar sind, vorzugsweise durch abschnittsweise Veränderung des Radius' von mindestens einer der Laufspuren (3a, 3b) oder durch Verdrehung mindestens einer der Laufspuren (3a, 3b) um die Drehachse (X) des Rotationskopfs, sodass die Drehwinkelbereiche (A, A'; B, B') der Kurvenbahnabschnitte verändert werden, insbesondere, um den Drehwinkelbereich (A, A') des der Arbeitsstellung des Heizorgans zugeordneten Kurvenbahnabschnitts (A, A') zu verlängern und gleichzeitig den Drehwinkelbereich des der Wartestellung des Heizorgans zugeordneten Kurvenbahnabschnitts (B, B') zu verkürzen, oder umgekehrt, bevorzugt proportional zu einer Drehzahländerung, sodass eine Verdopplung der Drehzahl zu einer Verdopplung der Länge des der Arbeitsstellung des Heizorgans zugeordneten Drehwinkelbereichs (A, A') führt.

6. Rotationskopf (1) nach einem der beiden vorangehenden Ansprüche, **dadurch gekennzeichnet, dass** der Rotationskopf (1) mindestens zwei Kurvenscheiben (3a, 3b) aufweist, wobei sich an jeder der Kurvenscheiben (3a, 3b) eine der Laufspuren (3a, 3b) befindet, wobei mindestens eine der Kurvenscheiben (3b) um die Drehachse (X) des Rotationskopfs (1) verdrehbar ist und ggf. eine der Kurvenscheiben (3a) drehfest mit der Drehachse (X) des Rotationskopfs (1) verbunden ist, wobei bevorzugt beide Kurvenscheiben deckungsgleich anordenbar sind.

7. Rotationskopf (1) nach einem der vorangehenden Ansprüche, **dadurch gekennzeichnet, dass** die Überführung des Heizorgans zwischen der Arbeitsstellung und der Wartestellung zyklisch erfolgt, vorzugsweise einmal pro Umdrehung des Rotationskopfs (1) um dessen Drehachse (X).

8. Rotationskopf (1) nach einem der vorangehenden Ansprüche, **dadurch gekennzeichnet, dass** das Verstellen des Drehwinkelbereichs (A, A') durch einen Antrieb, vorzugsweise einen automatisiert ansteuerbaren Stellantrieb wie einen Schrittmotor, einen Servomotor oder einen pneumatischen Stellantrieb erfolgt, vorzugsweise während der Drehung des Rotationskopfs (1).

9. Verpackungsmaschine mit einem Rotationskopf (1) nach einem der vorangehenden Ansprüche.

10. Verfahren zur Verpackung von kleinstückigen Produkten (P), insbesondere Süßwaren, in einem Packmittel (PM), vorzugsweise mit dem Rotationskopf (1) nach einem der vorangehenden Ansprüche und/oder mit der Verpackungsmaschine nach dem vorangehenden Anspruch, wobei das mit Packmittel (PM) umwickelte Produkt (P) in einem Halteorgan eines sich kontinuierlich drehenden Rotationskopfs (1) aufgenommen und während der Drehung des Rotationskopfs (1) um dessen Drehachse (X) von einer Aufnahmestation (AN) zu einer Abgabestation (AB) transportiert wird, wobei ein Heizorgan während der kontinuierlichen Drehung des Rotationskopfs (1) von einer Wartestellung in eine Arbeitsstellung überführt wird, in welcher das Heizorgan thermisch auf das dem im Halteorgan gehaltenen Produkt (P) zugeordnete Packmittel (PM) einwirkt, wobei der Drehwinkelbereich (A, A'), über welchen sich das Heizorgan in der Arbeitsstellung befindet, verstellt wird.

11. Verfahren nach dem vorangehenden Anspruch, **dadurch gekennzeichnet, dass** das Produkt (P) in der Einschlagart "Bodenfaltung", "Brieffaltung", insbesondere "diagonale Brieffaltung", teilverpackt im Halteorgan gehalten wird.

12. Verfahren nach einem der beiden vorangehenden Ansprüche, **dadurch gekennzeichnet, dass** sich an einer Seite des im Halteorgan gehaltenen Produkts (P), vorzugsweise am Produktboden, überlappende Packmittelfalten befinden, auf die das Heizorgan einwirkt, wobei der Produktboden bevorzugt rechteckig ist und/oder zu der Drehachse (X) des Rotationskopfs (1) hinweist.

13. Verfahren nacheinem der drei vorangehenden Ansprüche, **dadurch gekennzeichnet, dass** das Packmittel (PM) ein ein- oder mehrlagigesPackmittel ist, wobei das Packmittel vorzugsweise aus Kunststoff und/oder Metall und/oder Papier besteht.

14. Verfahren nach einem der vier vorangehenden Ansprüche, **dadurch gekennzeichnet, dass** sich der Rotationskopf (1) kontinuierlich mit einer Drehzahl im Bereich von 50 bis 200 Umdrehungen pro Minute (U/min), vorzugsweise im Bereich von 75 bis 150 U/min dreht.

15. Verfahren nach einem der fünf vorangehenden Ansprüche, **dadurch gekennzeichnet, dass** der Drehwinkelbereich (A, A'), in welchem sich das Heizorgan in der Arbeitsstellung befindet, mit zunehmender Drehzahl des Rotationskopfs (1) vergrößert wird und mit abnehmender Drehzahl des Rotationskopfs verkleinert wird.
